# EUROPÄISCHE PATENTSCHRIFT

(11) **EP 3 235 934 B1**
(45) Veröffentlichungstag und Bekanntmachung des Hinweises auf die Patenterteilung: **30.01.2019**
(21) Anmeldenummer: 17166242.2
(22) Anmeldetag: 12.04.2017
(51) Int. Cl.: D01H 4/14, F16C 32/04, H02K 7/09, H02K 11/30

(54) **SPINNROTORSCHAFT, LAGERANORDNUNG ZUM AKTIVEN MAGNETISCHEN LAGERN EINES SOLCHEN SPINNROTORSCHAFTS UND SPINNROTORANTRIEBSEINRICHTUNG**
SPINNING ROTOR SHAFT, BEARING ASSEMBLY FOR ACTIVE MAGNETIC BEARINGS OF SUCH A SPINNING ROTOR SHAFT AND SPINNING ROTOR DRIVE
ARBRE DE ROTOR DE FILATURE, AGENCEMENT DE PALIER DESTINÉ AU LOGEMENT MAGNÉTIQUE ACTIF D'UN TEL ARBRE DE ROTOR DE FILATURE ET DISPOSITIF D'ENTRAÎNEMENT DE ROTOR DE FILATURE

(30) Priorität: 19.04.2016 DE 102016004714
(43) Veröffentlichungstag der Anmeldung: 25.10.2017
(73) Patentinhaber: Saurer Spinning Solutions GmbH & Co. KG, 52531 Übach-Palenberg (DE)
(72) Erfinder: Brakensiek, Dirk, 41470 Neuss (DE); Burchert, Mathias, 73760 Ostfildern (DE)
(74) Vertreter: Morgenthum-Neurode, Mirko

(56) Entgegenhaltungen:
- DE-A1- 2 420 814
- DE-A1- 2 420 825
- DE-A1- 19 827 606
- DE-A1-102006 021 197
- DE-A1-102006 030 187
- DE-A1-102007 028 935
- DE-A1-102014 104 531
- JP-A- H0 587 141
- JP-A- 2003 134 733
- JP-A- 2011 085 223
- US-A- 3 221 389

## Beschreibung

Die Erfindung betrifft eine Lageranordnung zum aktiven magnetischen Lagern eines Spinnrotorschafts einer Offenend-Spinnvorrichtung.

Die Dokumente DE 198 27 606 A1 und JP H05 87141 A offenbaren eine Lageranordnung gemäß den oberbegrifflichen Merkmalen des Anspruchs 1.

Die Dokument JP 2003 134 733 A und DE 10 2006 021197 A1 betreffen mögliche Anordnungen aktiver magnetischer Axiallager entlang eines Rotorschafts bzw. gegenüber einem Rotorschaftende.

Mit dem Dokument DE 10 2014 104 531 A1 ist ein Magnetlager für einen Spinnrotor offenbart, welches auf einer Kombination einer aktiven magnetischen Radiallagerung mit einer passiven magnetischen Axiallagerung beruht. Dabei kann eine aktive magnetische Radiallagerkomponente durch einen Motor bewirkt werden, der zusätzlich zum Antriebsmoment Radialkräfte zur radialen Zentrierung eines Spinnrotorschafts des Spinnrotors erzeugen kann.

Die Dokumente DE 10 2006 030 187 A1 und DE 10 2007 028 935 A1 offenbaren jeweils eine Lageranordnung zum magnetischen Lagern eines Spinnrotors mit einem passiven magnetischen Radiallager und einem aktiven magnetischen Axiallager.

Solche vorbekannten Magnetlager sind insbesondere für einen annähernd verschleißfreien Betrieb des Spinnrotors mit hohen Drehzahlen von bis zu 200.000 min⁻¹ vorteilhaft. Jedoch unterliegen diese Magnetlager aufgrund der Auslegung und der entsprechenden Ausgestaltung des Spinnrotorschafts einer Drehzahlgrenze, die einen Betrieb des mit dem Spinnrotorschaft gekoppelten Spinnrotors mit Drehzahlen deutlich über 200.000 min⁻¹ verhindert. Weiterhin bedingt die jeweils eingesetzte passive magnetische Radial- bzw. Axiallagerung eine geringere Steifigkeit in der entsprechenden Lagerrichtung, wodurch die Positionsgenauigkeit negativ beeinflusst werden kann. Ein passives Magnetlager zeichnet sich im Allgemeinen durch die Nutzung einer regelfreien Wechselwirkung von zwischen Permanentmagneten vorherrschenden an- oder abstoßenden Kräften aus.

Ausgehend vom vorgenannten Stand der Technik liegt der Erfindung die Aufgabe zugrunde, eine Lageranordnung zum magnetischen Lagern eines Spinnrotorschafts einer Offenend-Spinnmaschine bereitzustellen, mittels welchen eine Positionsgenauigkeit des Spinnrotorschafts verbessert und insbesondere ein Betrieb eines mit dem Spinnrotorschaft gekoppelten oder koppelbaren Spinnrotors mit sehr hohen Drehzahlen, insbesondere von deutlich über 200.000 min⁻¹, insbesondere von mehr als 220.000 min⁻¹ möglich ist. Ferner soll die Lageranordnung in bevorzugter Weise eine hohe Radial- als auch Axialsteifigkeit gewährleisten.

Diese Aufgabe wird durch eine Lageranordnung mit den Merkmalen nach dem Anspruch 1 gelöst.

Vorteilhafte Ausgestaltungen sind jeweils Gegenstand der Unteransprüche.

Die Lageranordnung umfasst zumindest ein mittels eines elektronischen Regelsystems beeinflussbares aktives magnetisches Radiallager für den zu lagernden Spinnrotorschaft. Das aktive magnetische Radiallager begünstigt eine kompaktere Bauform der Lageranordnung sowie des davon zu lagernden Spinnrotorschafts. Zum einen kann auf eine für eine passive magnetische Radiallagerung erforderliche aktive Dämpfung zur Unterstützung einer geringen Lagersteifigkeit bei instationären Betriebszuständen verzichtet werden.

Die Lageranordnung weist ferner ein mittels des oder eines weiteren elektronischen Regelsystems beeinflussbares aktives magnetisches Axiallager für den Spinnrotorschaft auf. Das aktive magnetische Axiallager ermöglicht eine höhere Axialsteifigkeit, wodurch eine sehr genaue Positionierung des Spinnrotorschafts bzw. des damit gekoppelten oder koppelbaren Spinnrotors erreicht wird. Weiterhin kann einer Verschiebung der Welle in axialer Richtung durch äußere Kräfte bedingt bspw. durch den Spinnunterdruck bzw. dessen Schwankung gezielt entgegen gewirkt werden. Des Weiteren kann in Verbindung mit dem aktiven magnetischen Radiallager durch Beeinflussung der Lage in Richtung der jeweiligen Lagerachsen aufgrund des besseren Durchgriffs ein ruhigerer Lauf und somit eine sehr hohe Drehzahl von über 220.000 min⁻¹ erreicht werden. In bevorzugter Weise kann das bereits mit dem aktiven magnetischen Radiallager vorgesehene Regelsystem für eine Beeinflussung des aktiven magnetischen Axiallagers eingesetzt werden, wodurch Kosten, Bauraum und Elektronik eingespart werden können.

Bei dem jeweiligen aktiven magnetischen Radial- und Axiallager kann es sich um handelsübliche aktive magnetische Lager handeln, die entsprechend als Radial- bzw. Axiallager ausgelegt sind und eingesetzt werden.

Unter einem aktiven magnetischen Lager wird im Sinne der vorliegenden Erfindung ein elektromagnetisch wirkendes Lager verstanden, dessen mittels eines oder mehreren Elektromagneten erzeugten Magnetkräfte in kontrollierter Weise beeinflussbar sind, um auf äußere Einflussfaktoren bzw. Kräfte mit regelbaren magnetischen Gegenkräften reagieren zu können, damit die zu lagernde Komponente, also der Spinnrotorschaft, in der gewünschten Position stabil gehalten werden kann. Üblicherweise sind einem aktiven magnetischen Lager Lage- bzw. Positionssensoren zur Erfassung einer Lage bzw. Position der zu lagernden Komponente zugeordnet. Die Lagesensoren sind mit einem Regelsystem gekoppelt, welches abhängig von den übermittelten Sensorinformationen das elektromagnetisch wirkende Lager zur stabilen Lagerung der zu lagernden Komponente bedarfsgerecht regelt.

Nach einer bevorzugten Ausführungsform der Erfindung ist der Lageranordnung ein lagerloser Motor zum Antrieb des Spinnrotorschafts zugeordnet, wobei der lagerlose Motor ferner als ein weiteres oder als das zumindest eine oder als das einzige aktive magnetische Radiallager eingerichtet ist. Lagerlose Motoren zeichnen sich dadurch aus, dass diese zum berührungsfreien Antrieb einer Komponente sowie zum berührungsfreien radialen Lagern der anzutreibenden Komponente geeignet sind. Dabei können solche lagerlosen Motoren zwei Statorwicklungen, eine zum berührungsfreien Antrieb und die andere zum berührungsfreien Lagern aufweisen. Alternativ dazu können in ein und derselben Statorwicklung sowohl "Antriebsströme" als auch "Lagerströme" überlagert eingespeist werden. Dadurch kann der lagerlose Motor neben Kräften für das Vortriebsmoment gleichzeitig auch die erforderlichen Kräfte bereitstellen, die zur Stabilisierung der translatorischen Freiheitsgrade der zu lagernden und anzutreibenden Komponente erforderlich sind. Die Verwendung eines lagerlosen Motors für die Lageranordnung einer Offenend-Spinnmaschine begünstigt eine kürzere Ausgestaltung des Spinnrotorschafts entlang seiner Rotationsachse. Dadurch kann die biegekritische Drehzahl des Spinnrotorschafts erhöht werden. Sofern die Spinnrotorschaftlänge ein Maß überschreitet, bei welchem die aktive magnetische Radiallagerung nur durch den lagerlosen Motor nicht mehr in zuverlässiger Weise gewährleistbar ist, kann die Lageranordnung insbesondere ein weiteres aktives magnetisches Radiallager aufweisen, das beispielsweise durch ein vorbekanntes aktives magnetisches Radiallager ausgebildet sein kann.

Gemäß der vorliegenden Erfindung weist das aktive magnetische Axiallager entweder einen permanentmagnetischen Pol zum Beaufschlagen eines stirnseitigen Schaftendes mit einer Magnetkraft oder ein Magnetflussleitendes Material zum Wechselwirken mit einer von einem in dem stirnseitigen Schaftende angeordneten permanentmagnetischen Pol ausgehenden Magnetkraft auf. Weiterhin umfasst das aktive magnetische Axiallager einen Elektromagneten zum Erzeugen einer die Magnetkraft überlagernden stabilisierenden axialen elektromagnetischen Kraft. Der permanentmagnetische Pol bzw. das Magnetflussleitende Material ist dabei angeordnet, einem stirnseitigen Schaftende des Spinnrotorschafts gegenüber zu liegen. Der Elektromagnet ist angeordnet, einem querschnittlich stufenförmigen Mantelflächenabschnitt des Spinnrotorschafts gegenüber zu liegen. Der Aufbau des aktiven magnetischen Axiallagers kann dadurch entzerrt werden. Ferner ist eine solch bevorzugte Lageranordnung auch für die Verwendung von Spinnrotorschäften geeignet, welche für eine beispielhaft nachstehend beschriebene Lageranordnung mit zwei Elektromagneten ausgelegt sind, wodurch eine verbesserte Auswahl an Lageranordnungen bereitgestellt werden kann.

Eine solche beispielhafte Lageranordnung umfasst ein magnetisches Axiallager mit zumindest einem ersten Elektromagneten zur gegenüberliegenden Anordnung eines ersten querschnittlich stufenförmigen Mantelflächenabschnitts zum Erzeugen einer innerhalb des zu lagernden Spinnrotorschafts entlang seiner Rotationsachse gerichteten ersten Magnetkraftwirkung und einem zweiten Elektromagneten zur gegenüberliegenden Anordnung eines zweiten querschnittlich stufenförmigen Mantelflächenabschnitts zum Erzeugen einer innerhalb des zu lagernden Spinnrotorschafts entlang der Rotationsachse der ersten Magnetkraftwirkungsrichtung entgegengesetzt gerichteten zweiten Magnetkraftwirkung. Die den stufenförmigen Mantelflächenabschnitten gegenüberliegende Anordnung ist zum Erzeugen der für die Axiallagerung erforderlichen Reluktanzkräfte notwendig, deren Betrag und Richtung von der Ausgestaltung der Stufenform sowie der Anordnung der jeweiligen Elektromagnete zu der jeweilig zugeordneten Stufenform abhängt. Die Anordnung und Ausbildung der Stufenform ist dabei so gewählt, dass von den beiden Elektromagneten zueinander entgegengerichtete Reluktanzkräfte erzeugt werden. Die entgegengesetzt gerichteten elektromagnetisch erzeugten Reluktanzkräfte werden somit in axialer Lagerrichtung des Spinnrotorschafts regelbar überlagert, wodurch ein Betrag und eine Richtung einer auf den Spinnrotorschaft entlang seiner Rotationsachse bzw. axialen Lagerachse wirkenden elektromagnetischen Kraft einstellbar ist. Dadurch kann in geeigneter Weise auf Fremdkräfte reagiert werden, welche auf den Spinnrotorschaft entlang seiner axialen Lagerachse wirken und diesen aus der stabilen axialen Position verbringen könnten.

Die Elektromagnete des aktiven magnetischen Axiallagers können insbesondere derart ausgebildet sein, dass die jeweilige Wicklung einen zur Aufnahme des Spinnrotorschafts geeigneten Raum umläuft. Alternativ dazu kann die jeweilige Wicklung der Elektromagneten in bevorzugter Weise parallel zu der Rotationsachse erfolgen. Diese alternative Möglichkeit der Ausgestaltung des aktiven magnetischen Axiallagers begünstigt eine bedarfsgerechte Auslegung der Lageranordnung.

Die Ausgestaltung des aktiven magnetischen Axiallagers nach der vorliegenden Erfindung erlaubt in Verbindung mit dem aktiven magnetischen Radiallager eine Verwendung eines glatt im Sinne eines entlang einer Spinnrotorschaft-Rotationsachse annähernd gleichmäßig ausgeformten Durchmessers ausgebildeten Spinnrotorschafts, wodurch insgesamt eine Fliehkraftbelastung sowie eine Luftreibung des Spinnrotorschafts verringert und damit einhergehend ein wesentlich ruhigerer Lauf des Spinnrotorschafts in der Lageranordnung ermöglicht werden kann.

Der Spinnrotorschaft kann wenigstens in den aktiven magnetischen Radial- und Axiallagern gegenüberliegenden Schaftabschnitten, durch welche im Lagerzustand elektromagnetische Flüsse zur axialen und radialen

Lagerung des Spinnrotorschafts strömen, aus einem Magnetfluss leitenden Material ausgebildet sein. Dadurch kann der elektromagnetische Fluss im Spinnrotorschaft verlustfrei oder annähernd verlustfrei geleitet werden. Weiterhin kann der Spinnrotorschaft ausschließlich in den Schaftabschnitten, durch welche im Lagerzustand permanent- und elektromagnetische Flüsse zur axialen und radialen Lagerung des Spinnrotorschafts strömen, aus einem Magnetflussleitenden Material ausgebildet sein. Dadurch kann der Gefahr eines magnetischen Kurzschlusses innerhalb des Spinnrotorschafts zuverlässig begegnet werden.

Der Spinnrotorschaft kann wenigstens außerhalb der zum Durchleiten der radialen Lagerung bewirkenden elektromagnetischen Flüsse vorgesehenen Schaftabschnitte als glatte Welle kreiszylindrisch ausgebildet sein. Eine als glatte Welle kreiszylindrisch ausgebildete Form zeichnet sich dadurch aus, dass der Spinnrotorschaft wenigstens außerhalb der vorbezeichneten Schaftabschnitte frei von radialen Vorsprüngen ist, die einen den Kreiszylinder definierenden Außendurchmesser radial überragen oder von diesem abragen. Dadurch kann das Gewicht und somit eine Fliehkraftbelastung des Spinnrotorschafts weiter verringert werden, wodurch sehr hohe Drehzahlen mit dem Spinnrotorschaft begünstigt werden. Ferner wird dadurch eine in radialer Richtung des Spinnrotorschafts kompakte Bauform der zugeordneten Lageranordnung ermöglicht, welches sich mit Blick auf den Bauraum der Offenend-Spinnvorrichtung begünstigend auswirkt. Des Weiteren kann der Spinnrotorschaft ohne größeren Aufwand aus der zugeordneten Lageranordnung insbesondere entlang der Rotations- bzw. axialen Lagerachse entfernt bzw. in diese entlang dieser Achse eingesetzt werden.

Weiterhin kann der Spinnrotorschaft in Schaftabschnitten, welche zum Zusammenwirken mit einem Fang- oder Begrenzungslager vorgesehen sind, einen wenigstens zu benachbarten bzw. angrenzenden Schaftabschnitten kleineren Durchmesser aufweisen. Dadurch weist der Spinnrotorschaft in diesen Schaftabschnitten während des Betriebes bzw. seiner Rotation eine kleinere Umfangsgeschwindigkeit auf. So kann sichergestellt werden, dass in diesen Lagerbereichen geringere Kräfte bei einem Ausfall der Lageranordnung wirken, wodurch die Sicherheit der Lageranordnung für den Defektfall erhöht werden kann. Bei dem Fang- oder Begrenzungslager handelt es sich um übliche Lager zum Fangen des Spinnrotorschafts bzw. Begrenzen einer Verschiebebewegung des Spinnrotorschafts entlang seiner axialen und/oder radialen Richtung.

Insbesondere kann der Spinnrotorschaft vollständig als glatte Welle kreiszylindrisch ausgeformt sein. So weisen die vorbezeichneten Schaftabschnitte einen Außendurchmesser auf, der gleich oder kleiner dem den Kreiszylinder definierenden Außendurchmesser ist, wodurch die vorstehenden vorteilhaften Wirkungen in verbesserter Weise erreicht werden können.

Weiterhin kann der zum Durchleiten des die radiale Lagerung bewirkenden elektromagnetischen Flusses ausgebildete Schaftabschnitt ein von dem Spinnrotorschaft getrenntes Bauteil sein, welches auf den Spinnrotorschaft montierbar ist. Der Schaftabschnitt kann dabei auf den Spinnrotorschaft bis zu einer definierten Position aufschiebbar und/oder in einer dem Schaftabschnitt in der Mantelfläche des Spinnrotorschafts zugeordneten Aussparung positionierbar ausgestaltet sein. Der Spinnrotorschaft kann dadurch einfach und kostengünstig ausgebildet werden, wobei die Magnetflussleitenden Schaftabschnitte an von der Lageranordnung festgelegte Erfordernisse bedarfsgerecht ausgestaltbar und anordbar sind. So kann ein Spinnrotorschaft für verschiedenartig ausgestaltete Lageranordnungen bereitgestellt werden, wobei der jeweilige auf die Lageranordnung abgestimmte Schaftabschnitt an einer definierten Position entlang der Schaftlängsachse bzw. der Rotationsachse insbesondere auswechselbar platzierbar ist. Eine entlang der Schaftlängsachse bzw. Rotationsachse des Spinnrotorschafts gerichtete feste Positionierung des Schaftabschnittes kann in geeigneter Weise beispielsweise mittels Eingreif- und/oder Anlageelementen an dem Spinnrotorschaft und/oder dem Schaftabschnitt erfolgen.

Der Spinnrotorschaft kann zur Verwendung in einer Lageranordnung nach der vorliegenden Erfindung insbesondere auf diese abgestimmt sein. Der Spinnrotorschaft ist dafür an seinem stirnseitigen Schaftende, der zur gegenüberliegenden Anordnung zu dem aktiven magnetischen Axiallager vorgesehen ist, aus einem Magnetflussleitenden Material ausgebildet, sofern das aktive magnetische Axiallager den permanentmagnetischen Pol aufweist. Alternativ dazu kann der Spinnrotorschaft an dem stirnseitigen Schaftende einen permanentmagnetischen Pol wie einen Nord- oder Südpol aufweisen, der, sofern das aktive magnetische Axiallager einen permanentmagnetischen Pol aufweist, unterschiedlich zu diesem ist. Somit kann zwischen dem stirnseitigen Schaftende und dem aktiven magnetischen Axiallager im Betrieb eine magnetische Anziehungskraft sichergestellt werden.

Eine gemäß der vorliegenden Erfindung vorgeschlagene Lageranordnung ist in bevorzugter Weise für eine Spinnrotorantriebseinrichtung für eine Offenend-Spinnvorrichtung in Verbindung mit einem entsprechend ausgestalteten Spinnrotorschaft nach einem der beispielhaft vorstehend beschriebenen Ausführungsformen geeignet. Der Spinnrotorschaft kann insbesondere auswechselbar in der Lageranordnung gelagert sein. So kann für die Offenend-Spinnvorrichtung eine als Baueinheit mit aufeinander abgestimmten Komponenten ausgeführte Antriebseinheit für einen Spinnrotor bereitgestellt werden, für welchen weiterhin bevorzugt eine Rotortasse mit dem Spinnrotorschaft zu koppeln ist oder der Spinnrotorschaft bereits mit einer Rotortasse zum Ausbilden eines Spinnrotors gekoppelt oder einstückig ausgebildet ist. Der Spinnrotorschaft weist für die Kopplung eine übliche drehmomentübertragende Kopplungsstelle auf.

Weitere Merkmale und Vorteile der Erfindung ergeben sich aus der nachfolgenden Beschreibung von bevorzugten Ausführungsbeispielen der Erfindung, anhand der Figuren und Zeichnungen und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert.

Es zeigen:
- Fig. 1: eine schematische Darstellung einer Lageranordnung mit einem Spinnrotorschaft nach einem ersten Ausführungsbeispiel;
- Fig. 2: eine schematische Darstellung einer Lageranordnung mit einem Spinnrotorschaft nach einem zweiten Ausführungsbeispiel;
- Fig. 3: eine schematische Darstellung einer Lageranordnung mit einem Spinnrotorschaft nach einem dritten Ausführungsbeispiel;
- Fig. 4: eine schematische Darstellung einer Lageranordnung mit einem Spinnrotorschaft nach einem vierten Ausführungsbeispiel;
- Fig. 5: eine schematische Darstellung einer Lageranordnung mit einem Spinnrotorschaft nach einem fünften Ausführungsbeispiel; und
- Fig. 6: eine schematische Darstellung einer Lageranordnung mit einem Spinnrotorschaft nach einem sechsten Ausführungsbeispiel.

In der nachfolgenden Beschreibung von Ausführungsbeispielen werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

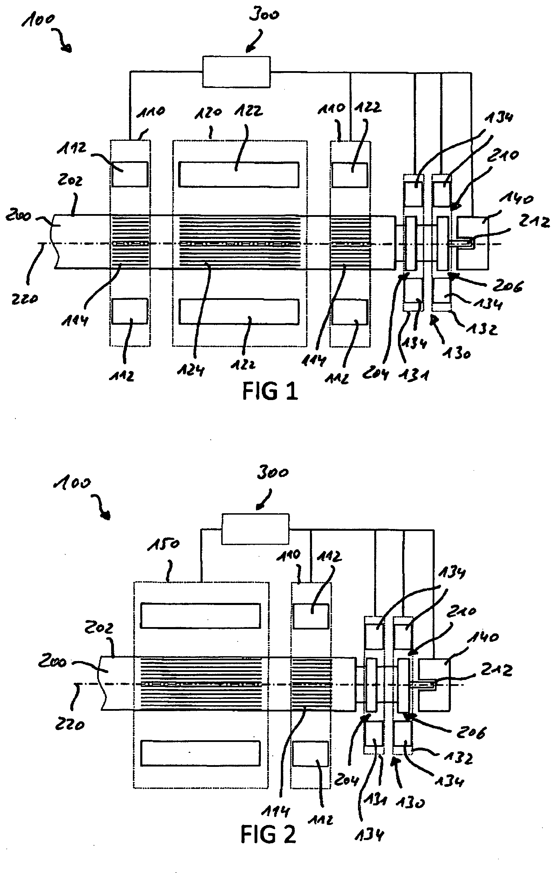

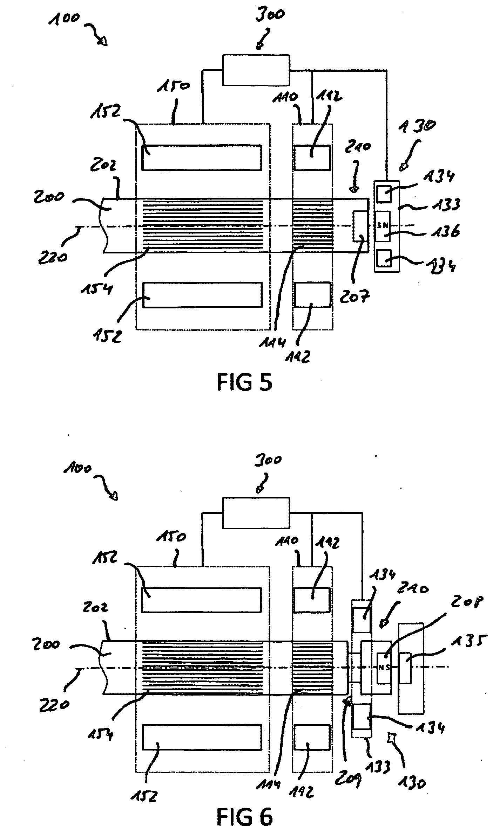

Figuren 1 bis 6 zeigen in schematischer Darstellung eine Lageranordnung 100 mit einem Spinnrotorschaft 200 nach einem ersten bis sechsten Ausführungsbeispiel, wobei das Ausführungsbeispiel der Figur 6 ein bevorzugtes Ausführungsbeispiel nach der vorliegenden Erfindung zeigt. Die mit den Figuren 1 bis 5 gezeigten Ausführungsbeispiele sollen lediglich zum Verständnis der vorliegenden Erfindung beitragen und sind vom Gegenstand der Patentansprüche nicht umfasst.

Die mit Figur 1 gezeigte Lageranordnung 100 nach dem ersten Ausführungsbeispiel umfasst zwei aktive magnetische Radiallager 110, welche in Anordnungsrichtung beiderseits eines Motors 120 zum Antrieb des als glatte Welle kreiszylindrisch ausgebildeten Spinnrotorschafts 200 einrahmen. Bei dem Motor 120 handelt es sich um einen üblichen, zum drehbeweglichen Antrieb eines Spinnrotorschafts geeigneten kommutierten Gleichstrommotor mit einem Wicklungspaket 122 im Stator und einem mit dem Spinnrotorschaft 200 gekoppelten Permanentmagneten 124 im Rotor.

Das jeweilige aktive magnetische Radiallager 110 ist üblich mit einem Stator und einem Rotor aufgebaut. Der Rotor ist aus einem elektromagnetischen Fluss leitenden Material 114 ausgebildet und in der Mantelfläche 202 des Spinnrotorschafts 200 eingelassen angeordnet. Im Stator sind Wicklungen 112 zum Erzeugen eines elektromagnetischen Feldes gleichverteilt um den Spinnrotorschaft 200 derart angeordnet, dass die von den Wicklungen 112 erzeugten regelbaren Magnetkräfte radial zum Rotor 114 wirken, um den Spinnrotorschaft 200 in Position halten zu können.

Die Lageranordnung 100 weist zudem ein aktives magnetisches Axiallager 130 auf, welches auf einer einer Rotortasse fernen Seite der Lageranordnung 100 zum Gegenüberliegen eines Schaftendes 210 des Spinnrotorschafts 200 angeordnet ist. Das aktive magnetische Axiallager 130 weist einen ersten 131 und zweiten Elektromagneten 132 mit jeweils eine um das Schaftende 210 umlaufende Wicklung 134 zum Erzeugen von axial wirkenden Magnetkräften auf. Das aktive magnetische Axiallager 130 wird derart angesteuert, dass die von den Elektromagneten 131, 132 erzeugten Magnetkräfte zueinander entgegengerichtet sind, um durch betragsmäßige Überlagerung der Magnetkräfte eine stabile axiale Positionierung des Spinnrotorschafts 200 zu ermöglichen. Sowohl die aktiven magnetischen Radiallager 110 und als auch das aktive magnetische Axiallager 130 werden über ein gemeinsames elektronisches Regelsystem 300 geregelt. Der Aufbau eines Regelsystems zur Lageregelung eines Spinnrotorschafts ist üblich. Bei der Lageranordnung 100 nach der vorliegenden Erfindung liegt die Besonderheit aber darin, dass bei den gezeigten Ausführungsbeispielen sowohl das jeweilige aktive magnetische Radiallager 110 als auch das aktive magnetische Axiallager 130 über ein, insbesondere gemeinsames, Regelsystem 300 zur Positionierung des Spinnrotorschafts 200 in einer stabilen Lagerstellung geregelt wird. Ein solches Regelsystem 300 umfasst in vorbekannter Weise axiale und radiale Positionssensoren zum Erfassen der radialen bzw. axialen Position des Spinnrotorschafts 200 sowie einen damit gekoppelten Messverstärker zum Verstärken der von den Sensoren übertragenen Messsignale und einem Signalprozessor zum Verarbeiten der Messsignale. Der Signalprozessor ist ausgangsseitig mit einem Leistungsverstärker gekoppelt, über welchen entsprechende Regelsignale zum Verbringen des Spinnrotorschafts 200 aus einer Ist- in eine Sollposition ausgegeben und an die aktiven magnetischen Radial- 110 und Axiallager 130 übertragen werden.

Zur Regelung dieser aktiven magnetischen Lager können vorzugsweise auch mehr als ein Regelsystem zum Einsatz kommen. Dabei können in besonders bevorzugter Weise ein oder mehrere Regelsysteme redundant ausgelegt sein, um sowohl bei Defekt eines Regelsystems die entsprechende Regelung der davon geregelten Komponenten zu übernehmen, als auch optional oder alternativ während des Betriebes die Regelung des einen Regelsystems zu überprüfen.

Die Lageranordnung 100 nach diesem ersten Ausführungsbeispiel weist darüber hinaus ein beispielsweise aus dem Dokument DE 10 2007 028 935 A1 vorbekanntes axiales Begrenzungslager 140 auf, welches einen axialen Positionssensor trägt, der mit dem Regelsystem 300 gekoppelt ist und auf das Schaftende 210 wirkt. Das Schaftende 210 weist für die Funktion der Begrenzung ein von diesem entlang der Rotationsachse abragenden, in das Begrenzungslager 140 hineinragenden Fortsatz 212 auf.

Der Spinnrotorschaft 200 ist vollständig als glatte Welle kreiszylindrisch ausgebildet. Der den Kreiszylinder definierende Außendurchmesser des Spinnrotorschafts 200 wird dabei durch keinen dem Spinnrotorschaft 200 zugeordneten, von diesem radial abragenden Vorsprung überragt. Dadurch kann die Lageranordnung 100 in radialer Lagerrichtung äußerst kompakt ausgebildet werden. Ferner kann ein Austausch des Spinnrotorschafts 200 problemlos vorgenommen werden.

Der Spinnrotorschaft 200 weist an seinem Schaftende 210, welches dem Rotortassen seitigen Ende abgewandt ist, im Bereich des aktiven magnetischen Axiallagers 130 jeweils eine Einschnürung auf, durch welche die Mantelfläche 202 in einem jeweiligen dem aktiven magnetischen Axiallager 130 gegenüberliegenden Abschnitt 204, 206 querschnittlich stufenartig ausgebildet ist. Die stufenartige Kontur bewirkt eine Erzeugung von Reluktanzkräften, welche bei entsprechender Regelung des aktiven magnetischen Axiallagers 130 eine Korrektur der axialen Position des Spinnrotorschafts 200 ermöglichen.

Im Bereich des Motors 120 ist der Spinnrotorschaft 200, wie vorstehend beschrieben, mit einem Permanentmagneten 124 im Rotor des Motors 120 versehen. Im jeweiligen Bereich der aktiven magnetischen Radiallager 110 ist ein Magnetflussleitendes Material in der Mantelfläche 202 des Spinnrotorschafts 200 eingelassen.

Das mit Figur 2 gezeigte zweite Ausführungsbeispiel unterscheidet sich von dem ersten Ausführungsbeispiel lediglich durch die Ausgestaltung des Motors. Bei dem zweiten Ausführungsbeispiel ist ein lagerloser Motor 150 eingesetzt, welcher neben der Antriebskomponente auch eine radiale Lagerkomponente übernimmt, wodurch die Lageranordnung 100 nach dem zweiten Ausführungsbeispiel gegenüber der Lageranordnung 100 nach dem ersten Ausführungsbeispiel um ein aktives magnetisches Radiallager körperlich reduziert ist. Ein solcher lagerloser Motor 150 ist in üblicher Weise derart ausgestaltet, dass ein vierpoliges Tragfeld gegenüber einem zweipoligen Rotorfeld erzeugt wird, so dass die zur radialen Lagerung benötigten Magnetkräfte im Aktivteil des lagerlosen Motors 150 erzeugt werden können. Die Verwendung des lagerlosen Motors 150 erlaubt eine Vereinfachung des Aufbaus der Lageranordnung. Lediglich der Positionssensor sowie die Lageregelung durch das Regelsystem 300 bleiben erhalten.

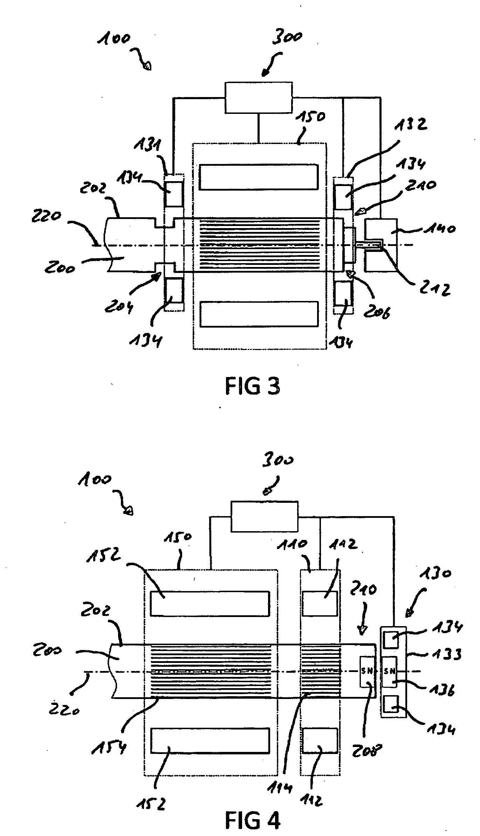

Mit Figur 3 wird ein drittes Ausführungsbeispiel einer Lageranordnung 100 gezeigt, welches sich von dem zweiten Ausführungsbeispiel durch eine weitere Reduzierung eines aktiven magnetischen Radiallagers sowie durch eine veränderte Anordnung der Elektromagnete 131, 132 des aktiven magnetischen Axiallagers 130 unterscheidet. Die Elektromagnete 131, 132 sind beidseits des lagerlosen Motors 150 angeordnet. Diese Lageranordnung 100 ist insbesondere vorteilhaft für kurze Spinnrotorschäfte 200. Aufgrund der Tatsache, dass das aktive magnetische Axiallager 130 neben einer axialen Magnetkraftkomponente auch eine radiale Magnetkraftkomponente im Betrieb erzeugt, kann die radiale Magnetkraftkomponente zum radialen Lagern des Spinnrotorschafts 200 genutzt werden.

Der Spinnrotorschaft 200 nach diesem dritten Ausführungsbeispiel unterscheidet sich von den Spinnrotorschäften 200 nach dem ersten und zweiten Ausführungsbeispiel durch die Ausbildung der querschnittlich stufenartigen Mantelfläche 202 in einem der geänderten Anordnung des aktiven magnetischen Axiallagers 130 gerecht werdenden anderen Abschnitt des Spinnrotorschafts 200.

Figur 4 zeigt im Unterschied zu dem zweiten Ausführungsbeispiel eine Lageranordnung 100 nach einem vierten Ausführungsbeispiel mit einer alternativen Ausgestaltung des aktiven magnetischen Axiallagers 130 und des zugeordneten Schaftendes 210 des Spinnrotorschafts 200. Diese Variante kann insbesondere in alternativer Weise auch in einem der anderen beiden Ausführungsbeispiele Verwendung finden. Die alternative Variante des aktiven magnetischen Axiallagers 130 ist angeordnet, dem stirnseitigen Schaftende 210 des zu lagernden Spinnrotorschafts 200 gegenüber zu liegen, und umfasst einen permanentmagnetischen Südpol 136 zum Beaufschlagen des stirnseitigen Schaftendes 210 mit einer Magnetkraft und einen Elektromagneten 133 zum bedarfsgerechten Überlagern der permanentmagnetischen Kraft. Der Spinnrotorschaft 200 nach diesem vierten Ausführungsbeispiel weist an dem zur gegenüberliegenden Anordnung zu dem aktiven magnetischen Axiallager 130 vorgesehenen stirnseitigen Schaftende 210 einen permanentmagnetischen Nordpol 208 zum Erzeugen einer zwischen den unterschiedlichen permanentmagnetischen Polen wirkenden magnetischen Anziehungskraft auf. Der permanentmagnetische Nordpol 208 ist in das stirnseitige Schaftende 210 eingelassen.

Ferner ist die Lageranordnung 100 nach dem vierten Ausführungsbeispiel ausgelegt, den Spinnrotorschaft 200 in einer der magnetischen Anziehungskraftwirkungsrichtung entgegengesetzten Richtung magnetisch vorgespannt zu lagern. Dies kann beispielhaft dadurch erreicht werden, dass in einem betriebslosen Zustand des lagerlosen Motors 150 die im Stator vorgesehene Wicklung 152 in axialer Lagerrichtung versetzt zu dem Rotor 154 angeordnet wird. In einem Betriebszustand des lagerlosen Motors 150 werden dann in axialer Lagerrichtung wirkende magnetische Vorspannkräfte erzeugt, die entgegen der Anziehungskraft des aktiven magnetischen Axiallagers 130 wirken. Der Versatz ist insbesondere derart gewählt, dass im dargestellten Betriebszustand der Lageranordnung 100 der Versatz zwischen Wicklung 152 und Rotor 154 aufgehoben ist.

Figur 5 zeigt mit dem fünften Ausführungsbeispiel eine alternative Variante zu dem vierten Ausführungsbeispiel mit dem einzigen Unterschied, dass der Spinnrotorschaft 200 anstelle eines permanentmagnetischen Pols ein Magnetflussleitendes Material 207 aufweist, welches in magnetischer Wechselwirkung mit dem permanentmagnetischen Südpol 136 des aktiven magnetischen Axiallagers 130 steht.

Figur 6 zeigt ein sechstes Ausführungsbeispiel mit einer zu dem vierten Ausführungsbeispiel alternativen Variante eines aktiven magnetischen Axiallagers 130 und eines dafür vorgesehenen Spinnrotorschafts 200. Das aktive magnetische Axiallager 130 weist ein Magnetflussleitendes Material 135 auf, welches angeordnet ist, einem permanentmagnetischen Südpol 208, welcher in dem stirnseitigen Schaftende 210 des Spinnrotorschafts 200 angeordnet ist, gegenüber zu liegen, um in axialer Lagerrichtung des Spinnrotorschafts 200 magnetische Anziehungskräfte zu erzeugen.

Des Weiteren ist dem aktiven magnetischen Axiallager 130 ein Elektromagnet 133 zugeordnet, der angeordnet ist, wie die Elektromagnete 131, 132 der ersten bis dritten Ausführungsbeispiele einem stufenartigen Mantelflächenabschnitt 209 gegenüber zu liegen, um in axialer Lagerrichtung Reluktanzkräfte erzeugen zu können. Der Elektromagnet 133 ist eingerichtet und ansteuer- sowie regelbar, in axialer Lagerrichtung der magnetischen Anziehungskraft entgegengerichtete regelbare Kräfte zur Stabilisierung der axialen Lagerposition des Spinnrotorschafts 200 zu erzeugen. Dadurch kann der Aufbau der Lageranordnung 100 im Vergleich zu dem vierten und fünften Ausführungsbeispiel vereinfacht werden, da der dem aktiven magnetischen Axiallager 130 zugeordnete Elektromagnet 133 in dieser Anordnung und Wirkweise in vorteilhafter Weise die vorstehend beschriebene magnetische Vorspannung ersetzt.

In einer nicht dargestellten alternativen Weise zu dem sechsten Ausführungsbeispiel kann das Magnetflussleitende Material des aktiven magnetischen Axiallagers 130 gemäß einem weiteren Ausführungsbeispiel durch einen permanentmagnetischen Pol ersetzt werden, welcher unterschiedlich zu dem in dem stirnseitigen Schaftende 210 angeordneten permanentmagnetischen Pol 208 magnetisiert ist. Weiterhin alternativ kann nach einem weiteren Ausführungsbeispiel das stirnseitige Schaftende 210 anstelle des permanentmagnetischen Pols ein Magnetflussleitendes Material aufweisen, wobei das aktive magnetische Axiallager 130 dem Magnetflussleitenden Material gegenüberliegend einen permanentmagnetischen Pol aufweist. Grundsätzlich ist jegliche Variante denkbar, solange zwischen dem stirnseitigen Schaftende 210 des Spinnrotorschafts 200 und der diesem gegenüberliegende Komponente des aktiven magnetischen Axiallagers 130 eine in axialer Lagerrichtung wirkende magnetische Anziehungskraft erzeugbar ist.

Die beschriebenen und in den Figuren gezeigten Ausführungsbeispiele sind nur beispielhaft gewählt. So können grundsätzlich bei allen Ausführungsbeispielen übliche vorbekannte Fang- und/oder Begrenzungslager vorgesehen sein, um einen sicheren Betrieb des Spinnrotorschafts 200 durch Verhindern eines Ausreißens des Spinnrotorschafts 200 bspw. im Defektfall der Lageranordnung 100 zu gewährleisten.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Lageranordnung (100) eines Spinnrotorschafts (200) für eine Offenend-Spinnvorrichtung, wobei die Lageranordnung (100) zumindest ein mittels eines elektronischen Regelsystems (300) beeinflussbares aktives magnetisches Radiallager (110) für den Spinnrotorschaft (200) umfasst, wobei die Lageranordnung (100) ein mittels des oder eines weiteren elektronischen Regelsystems (300) beeinflussbares aktives magnetisches Axiallager (130) für den Spinnrotorschaft aufweist
**dadurch gekennzeichnet, dass**
das aktive magnetische Axiallager (130) entweder einen permanentmagnetischen Pol (136) zum Beaufschlagen eines stirnseitigen Schaftendes (210) mit einer Magnetkraft oder ein Magnetflussleitendes Material (135) zum Wechselwirken mit einer von einem in dem stirnseitigen Schaftende (210) angeordneten permanentmagnetischen Pol (208) ausgehenden Magnetkraft und einen Elektromagneten (133) zum Erzeugen einer die Magnetkraft überlagernde stabilisierende axiale elektromagnetische Kraft aufweist, wobei der permanentmagnetische Pol (136) bzw. das Magnetflussleitende Material (135) angeordnet ist, einem stirnseitigen Schaftende (210) des Spinnrotorschafts (200) gegenüber zu liegen und der Elektromagnet (133) angeordnet ist, einem querschnittlich stufenförmigen Mantelflächenabschnitt des Spinnrotorschafts (200) gegenüber zu liegen.

2. Lageranordnung (100) nach Anspruch 1, **dadurch gekennzeichnet, dass** die Lageranordnung (100) einen lagerlosen Motor (150) zum Antrieb des Spinnrotorschafts (200) umfasst, welcher ferner als ein weiteres oder als das zumindest eine aktive magnetische Radiallager eingerichtet ist.

## Claims

1. Bearing arrangement (100) of a spinning rotor shaft (200) for an open-end spinning device, whereby the bearing arrangement (100) comprises at least one active magnetic radial bearing (110) that can be influenced by an electronic control system (300), whereby the bearing arrangement (100) has an active magnetic axial bearing (130) for the spinning rotor shaft (200) which can be influenced by the or a further electronic control system (300),
**characterised in that**
the active magnetic axial bearing (130) has either a permanent magnetic pole (136) to apply magnetic force to a front shaft end (210) or a magnetically conductive material (135) to interact with a magnetic force, which emanates from a permanent magnetic pole (208) positioned in the front shaft end (210), and an electromagnet (133) to create a stabilising, superimposed, axial electromagnetic force, which interferes with the magnetic force; whereby the permanent magnetic pole (136) or the magnetically conductive material (135) is positioned opposite a front shaft end (210) of the spinning rotor shaft (200) and the electromagnet (133) is positioned opposite a cross-sectional tiered lateral surface section of the spinning rotor shaft (200).

2. Bearing arrangement (100) according to Claim 1, **characterised in that** the bearing arrangement (100) consists of a motor (150) without bearings to drive the spinning rotor shaft (200) which is furthermore established as a further or at least one magnetic radial bearing.

## Revendications

1. Ensemble de palier (100) d'un arbre de rotor de filage (200) pour un dispositif de filage à bout libéré, sachant que l'ensemble de palier (100) comporte au moins un palier radial magnétique actif (110), pour l'arbre de rotor de filage (200), influençable par au moins un système électronique de régulation (300),
sachant que l'ensemble de palier (100) présente un palier axial magnétique actif (130), pour l'arbre de rotor de filage, influençable par le ou un autre système électronique de régulation (300)
**caractérisé par le fait, que**
le palier axial magnétique actif (130) présente soit un pôle à magnétisation permanente (136) pour l'application sur une extrémité d'arbre frontale (210) d'une force magnétique, soit un matériau conducteur de flux magnétique (135) pour une interaction entre une force magnétique émanent d'un pôle à magnétisation permanente (208) agencé dans l'extrémité d'arbre frontale (210) et un électroaimant (133) pour la génération d'une force électromagnétique axiale stabilisante supérieure à la force magnétique, sachant que le pôle à magnétisation permanente (136) ou le matériau conducteur de flux magnétique (135) est agencé pour se trouver à l'opposé d'une extrémité d'arbre frontale (210) de l'arbre de rotor de filage (200) et que l'électroaimant (133) est agencé pour se trouver à l'opposé d'une découpe transversale, épaulée, de la surface de l'enveloppe de l'arbre de rotor de filage (200).

2. Ensemble de palier (100) selon la revendication 1, **caractérisé par le faitque** l'ensemble de palier (100) comporte un moteur sans roulement (150) pour l'entraînement de l'arbre de rotor de filage (200) et est préparé en tant qu'autre ou au moins que palier radial magnétique actif.
